# FASCICULE DE BREVET EUROPEEN

(11) **EP 2 373 187 B1**
(45) Date de publication et mention de la délivrance du brevet: **27.01.2016**
(21) Numéro de dépôt: 09768140.7
(22) Date de dépôt: 04.11.2009
(51) Int. Cl.: B29C 65/18, A41B 11/12, B05D 1/00

(54) **PROCÉDÉ D'ASSEMBLAGE D'UNE BANDE SUPPORT AVEC UNE MATIÈRE ADHÉSIVE**
VERFAHREN ZUM ZUSAMMENFÜGEN EINES TRÄGERSTREIFENS MIT EINEM KLEBEMATERIAL
METHOD FOR ASSEMBLING A CARRIER STRIP WITH AN ADHESIVE MATERIAL

(30) Priorité: 19.12.2008 FR 0858847
(43) Date de publication de la demande: 12.10.2011
(73) Titulaire: Cheynet & Fils, 43240 Saint Just Malmont (FR)
(72) Inventeur: BACHELARD, Pierre, F-43240 Saint Just Malmont (FR); BACHELARD, Christian, F-43240 Saint Just Malmont (FR)
(74) Mandataire: Cabinet Laurent & Charras
(86) Numéro de dépôt international: PCT/FR2009/052128
(87) Numéro de publication internationale: WO 2010/076438

(56) Documents cités:
- EP-A- 0 025 337
- EP-A- 1 770 196
- WO-A-91/09543
- FR-A- 1 540 295

## Description

L'invention se rattache au secteur technique des bandes supports en tous matériaux textile, plastique, papier ou similaires qui sont susceptibles de recevoir sur l'une de leur face une matière ayant des propriétés d'adhésion.

L'invention se rattache plus spécifiquement au secteur technique des supports textiles, du type rubans, dentelles, bas, bracelets susceptibles de recevoir intérieurement une ou des couches ou films de matériau siliconé ou autres pour assurer une fonction de tenue.

A l'origine de la présente invention, il est déjà connu dans des nombreuses applications variées de disposer un ou des couches de films de matériaux siliconés ou autres sur différents articles textiles à porter ou constituant un ceinturage. L'adjonction de la couche ou film en une matière siliconée ou similaire a essentiellement une fonction de tenue sur la partie du corps correspondante de l'usager. Les articles textiles récepteurs constituant le support ont par définition un aspect ou toucher plus ou moins lisse ou rugueux tenant compte essentiellement des matériaux utilisés, de la structure de tissage et de maillage.

A la connaissance du demandeur, la dépose de la couche ou film plastique s'effectue sur la bande ou partie support de l'article textile à l'aide d'un dispositif à buse ou à tête de projection.

Cela s'effectue par la mise en place du support textile ou en situation retournée s'il s'agit d'un bas ou similaire, et passage de la buse ou tête de projection de la matière siliconée. La qualité de finition dépend donc étroitement de l'état de surface de la zone textile accueillante et réceptrice du film siliconé. Si le support textile récepteur est lisse, le résultat et la présentation du film siliconé sont satisfaisants.

Si par contre, le support textile récepteur est de qualité moyenne et rugueuse par l'apparition de fils ou poils, ou similaires, on constate la persistance de ces défauts après dépose du film siliconé. Le toucher par l'opérateur de ces articles textiles à l'endroit de dépose du film ou de la couche siliconée est déterminante et les défauts sont immédiatement perçus au toucher. Dans certains cas, ils sont identifiables aussi visuellement.

Un autre problème réside aussi dans le fait que le support textile peut lui-même présenter des zones d'ouverture et l'absence de texture et ce pour des raisons qui sont liées à la destination ou à l'application des éventuels textiles considérés. Dans ce cas, le silicone est susceptible de pénétrer plus ou moins profondément dans ces ouvertures avec pour conséquence des qualités de finition pas toujours satisfaisantes.

La démarche du demandeur a donc été de réfléchir pour améliorer la qualité de cette dépose de film ou couche siliconé.

Etant tributaire d'un état de surface du support récepteur du film ou couche de silicone, toute l'attention a donc été portée dans un premier temps vigilant sur la qualité de l'article textile et aussi sur les conditions de projection et de dépose du film de silicone.

En pratique, malgré toutes les précautions prises, les défauts principaux signalés précédemment demeurent.

Face à cela, la démarche du demandeur a été de reconsidérer intégralement les conditions de dépose du film ou couche de silicone sur l'article textile lui-même.

La démarche du demandeur et de façon tout à fait inattendue a été de considérer différemment les conditions de dépose du film siliconé ou autres sur l'article textile support du type rubans, dentelles, bracelets, bandes, et autres.

La solution apportée par le Demandeur répond parfaitement aux objectifs recherchés avec une qualité de présentation du film ou couche en matériau siliconé ou similaire sur l'article textile irréprochable.

En pratique, la solution apportée présente de nombreuses extensions d'application sur d'autres supports en matériau textile et par exemple avec des bandes supports en matériau plastique ou en papier.

Pour ce faire, le procédé d'assemblage selon l'invention est conforme aux caractéristiques de la revendication 1.

Selon une autre caractéristique, la dépose dudit matériau ayant des propriétés d'adhésion et de tenue sur un corps récepteur s'effectue selon les applications d'un film continu plein ou aéré.

Selon une autre caractéristique, ledit matériau ayant des propriétés d'adhésion et de tenue est établi en une matière siliconée choisie pouvant être bi composant et susceptible d'avoir une réactivité de polymérisation avec la bande support sur moins d'un tour du cylindre.

Ces caractéristiques et d'autres ressortiront bien de la suite de la description.

Pour fixer l'objet de l'invention illustrée non limitativement aux figures des dessins où :

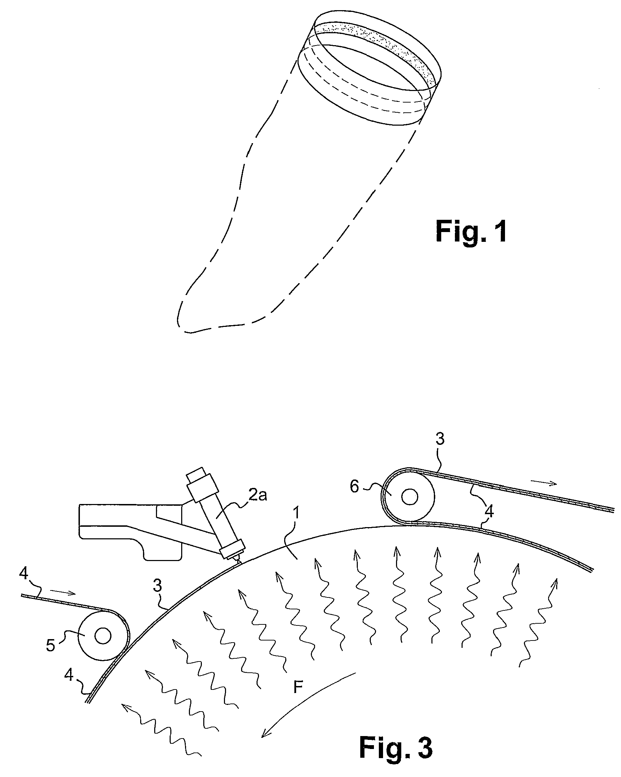

- la figure 1 est un article par exemple sous forme de bas recevant selon l'invention une bande support avec des déposes de matériaux ayant des propriétés adhésives et de tenue.
- la figure 2 est une vue à caractère schématique de l'installation susceptible de mettre en oeuvre le procédé de l'invention.
- la figure 3 est une vue à grande échelle du détail A de la figure 2.

Afin de rendre plus concret l'objet de l'invention, on le décrit de manière non limitative illustrée aux figures des dessins.

Il y a lieu préalablement de définir le procédé d'assemblage d'une bande support, qui peut être en matériau textile, plastique, papier ou autres, avec un matériau ayant des propriétés adhérentes et de tenue sur un support récepteur.

Ce support récepteur peut varier selon les applications et peut être une partie du corps d'un individu, par exemple bras, jambes ou autres.

La matière ayant des propriétés adhésives et de tenue est par exemple à base de silicone, mono ou bi-composant selon les applications, ou en polyuréhane, latex ou autres.

Ainsi le procédé selon l'invention met en oeuvre les phases suivantes :
a) dépose préalable de matériau, ayant des propriétés d'adhésion et de tenue sur un corps support récepteur, sur un cylindre chauffant susceptible d'être mis en rotation.
b) présentation d'une bande support en matériau textile, plastique, papier et similaires et acheminement vers ledit cylindre en aval du point de dépose dudit matériau.
c) positionnement de ladite bande support sur ledit matériau autour du cylindre avec action de pressage simultanée de ladite bande support sur ledit cylindre chauffant créant une liaison avec ledit matériau.
d) rotation du cylindre selon une amplitude de rotation déterminée en fonction de l'application à partir de la zone d'application dudit matériau sur le cylindre.
e) Evacuation de ladite bande support avec ledit matériau intégré en vue d'un traitement ultérieur de l'ensemble obtenu.

Ces déposes de matériau, par projection ou extrusion, ayant des propriétés d'adhérence et de tenue sur un corps récepteur, s'effectuent selon les applications sous forme d'un film continu, plein ou aéré. La dépose dudit matériau peut aussi être discontinue .avec des zones présentant des déposes de matériaux et d'autres sans. Cela permet de définir des lignes de points et de manière générale des conformations de matériau selon des configurations géométriques et dimensionnelles diverses.

Dans la suite de la description, on décrira l'installation de mise en oeuvre du procédé de l'invention à titre d'exemple avec la configuration d'un film de matériau siliconé et dans l'application ou la bande support est en matériau textile.

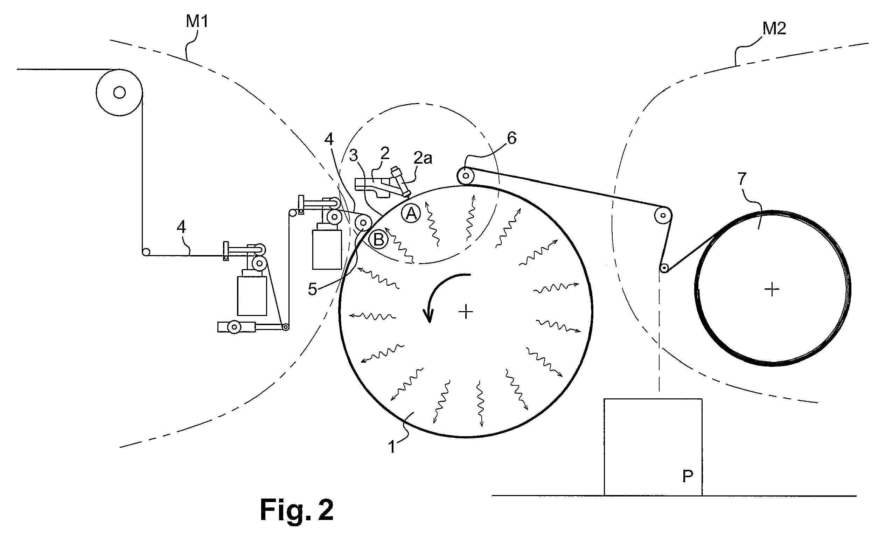

L'installation de mise en oeuvre du procédé de l'invention comprend, figure 2, un cylindre (1) chauffant avec un état de surface sur son pourtour périphérique variable, selon les besoins. Cet état de surface du cylindre sera lisse en vue d'obtenir un aspect lisse du matériau, et il sera rugueux pour matifier la surface jusqu'à être gravé pour obtenir des effets de marquage, dessins, inscriptions et autres. Le cylindre peut avoir un diamètre quelconque mais dans son optimisation de production le cylindre a un diamètre de l'ordre d'un mètre ce qui induit un contour périphérique de 3,14 mètres. La largeur du cylindre peut être de l'ordre de 30 à 70 cm. Cela est un bon compromis en considérant les critères de l'installation et la durée de polymérisation du film de matière siliconée avec la bande support en matériau textile destinée à être enroulée sur le cylindre pour fabrication de l'article textile final.

Le film en silicone est un bi composant.

Le chauffage du cylindre s'effectue jusqu'à définir une température constante de chauffe dont la valeur est établie en fonction des applications.. Son pourtour périphérique lisse ou rugueux est établi à partir d'un matériau constitutif apte à garantir une très grande qualité de l'état de surface. Transversalement, par rapport au cylindre (1) est disposé un moyen (2) de distribution de matière siliconée extrudée sur le cylindre. Ce moyen (2) peut être agencé avec une ou plusieurs têtes ou rampes de distribution (2a) de la matière siliconée pour réaliser des films ou couches (3) de matière siliconée déposés sur le cylindre selon une largeur déterminée. Le poste de dépose de la matière siliconée sur le cylindre est référencé par (A). Le moyen (2) définit donc aussi l'épaisseur du film siliconé en fonction des besoins de l'application.

En aval du poste (A), selon le sens de rotation (F) du cylindre se trouve disposé un mécanisme d'arrivée de la bande support en matériau textile (4) recevant le film siliconé. On a représenté par (M1) de manière tout à fait schématique le mécanisme d'arrivée de la bande (4) vers le poste de dépose de la bande textile en silicone préalablement déposé sur le cylindre en train de polymériser. Le mécanisme (M1) inclut par exemple un dispositif de régulation de tension de la bande.

Le poste (B) inclut un moyen presseur (5) sous forme d'un galet traversant le cylindre sur tout ou partie de sa largeur et correspondant en taille à la largeur maximum de la bande textile susceptible d'être traitée avec le film en silicone. Ce moyen presseur est monté de toute manière appropriée sur le bâti de l'installation dont le détail n'est pas précisé relevant des dispositions connues de l'homme de l'art. Ce moyen presseur (5) met donc en contact étroit la bande textile et le film de silicone, et permet leur imbrication. Le cylindre chauffant tournant est à une température déterminée et constante sur son pourtour périphérique récepteur du film en fonction des applications. La liaison moléculaire s'effectue donc entre le film en silicone et la bande support en matériau textile pendant la rotation du cylindre. L'avantage réside en ce que c'est le pourtour périphérique du cylindre qui est la référence de qualité de finition du film et non le support textile comme cela était le cas précédent.

En aval du poste (B), se situe le poste d'évacuation de la bande support en matériau textile et du film siliconé associé. Le poste (C) se situe en aval du poste (A) selon une section angulaire de l'ordre de 300 à 340° ce qui laisse un laps de temps conséquent de la rotation du cylindre entre les postes (B) et (C) pour assurer la liaison moléculaire de la bande support en matériau textile et du film siliconé. Au poste (C), se trouve un rouleau de renvoi (6) et d'évacuation de l'article fini vers un autre poste de traitement. Celui-ci peut être par exemple un rembobinage (7) de l'article obtenu (bande réalisée + film siliconé), ou une évacuation en vrac dans un container (P).

Il y a lieu de prévoir que la température du cylindre est fonction de la bande support en matériau textile considéré, de l'épaisseur du film de matière siliconée. On doit aussi tenir compte de la température de présentation de la bande support qui une fois enroulée sur le cylindre à un effet de refroidissement. Ce sont l'ensemble de ces paramètres qui permettent de choisir le meilleur compromis et la température du cylindre chauffant.

Les avantages ressortent bien de l'invention. On souligne tout d'abord la nouvelle conception retenue et la qualité du film en matière siliconée déposée sur le cylindre chauffant ayant un état de surface lisse parfait ou quasi parfait. On supprime de ce fait les aléas de la dépose du film siliconée directement sur l'article textile.

Le procédé selon l'invention trouve de nombreuses applications et la bande support peut être en matériau textile, plastiques, papier ou autres. En outre, le dépôt dudit matériau ayant la propriété d'adhérence et de tenue offre une large gamme de réalisations possibles, avec des configurations en continu ou en discontinu.

La fabrication de l'ensemble s'effectue en continu et de l'article fini incluant la bande support initiale et le film en matière siliconée ou autres peut éventuellement être utilisé pour tous besoins et applications et en conséquence découpé à la longueur.

Par ailleurs, un avantage essentiel réside dans le fait que les poils ou autres fils en débordement de l'article textile sont noyés dans l'épaisseur du film en matière siliconée de part l'effet du galet presseur et de la polymérisation liée au procédé de l'invention, et ils ne ressortent plus étant dans la masse du film. C'est ce qui explique que la qualité de finition de l'article fini est d'excellent qualité au toucher et détectable immédiatement visuellement.

## Revendications

1. Procédé d'assemblage d'une bande support (4) en matériau textile, plastique, papier ou similaire, sur un support récepteur avec un matériau (3) ayant des propriétés d'adhésion et de tenue, ledit procédé mettant en oeuvre les phases suivantes :
a) dépose préalable du matériau (3), ayant les propriétés d'adhésion et de tenue sur le corps support récepteur, sur un cylindre chauffant (1) susceptible d'être mis en rotation,
b) présentation de la bande support (4) en matériau textile, plastique, papier et similaires et acheminement vers ledit cylindre (1) en aval du point de dépose dudit matériau (3),
c) positionnement de ladite bande support (4) sur ledit matériau (3) autour du cylindre (1) avec action de pressage simultanée de ladite bande support sur ledit cylindre chauffant créant une liaison avec ledit matériau(3),
d) rotation du cylindre (1) selon une amplitude de rotation déterminée en fonction de l'application à partir de la zone d'application dudit matériau (3) sur le cylindre(1),
e) Evacuation de ladite bande support (4) avec ledit matériau (3) intégré en vue d'un traitement ultérieur de l'ensemble obtenu.

2. Procédé selon la revendication 1 **caractérisé en ce que** les déposes dudit matériau (3) ayant des propriétés d'adhésion et de tenue sur le support récepteur s'effectuent selon les applications d'un film continu plein ou aéré.

3. Procédé selon la revendication 1 **caractérisé en ce que** ledit matériau (3) ayant des propriétés d'adhésion et de tenue est établie en une matière susceptible d'avoir une réactivité de polymérisation avec la bande support sur moins d'un tour du cylindre.

4. Procédé selon la revendication 3, **caractérisé en ce que** ledit matériau (3) est réalisé en une matière siliconée.

5. Procédé selon la revendication 4, caractérisé ce que la matière siliconée est bi composant.

6. Procédé selon la revendication 3, **caractérisé en ce que** ledit matériau (3) est réalisé en une matière polyuréthane.

7. Procédé selon la revendication 3, **caractérisé en ce que** ledit matériau est réalisé en une matière latex.

8. Procédé selon la revendication 1 **caractérisé en ce que** le cylindre tournant (1) présente un pourtour périphérique avec un état de surface lisse en vue d'obtenir un aspect lisse du matériau.

9. Procédé selon la revendication 1 **caractérisé en ce que** le cylindre tournant présente un pourtour périphérique avec un état de surface rugueux en vue de matifier la surface jusqu'à être gravée pour l'obtention d'effet de marquage.

## Patentansprüche

1. Verfahren zum Zusammenfügen eines Trägerbandes (4) aus Textil, Kunststoff, Papier oder ähnlichem Material auf einem Empfängerträger mit einem Material (3), das gute Eigenschaften in Bezug auf Haftung und Beständigkeit besitzt, welches folgende Verfahrensschritte aufweist:
a) vorheriger Auftrag des Materials (3), das gute Eigenschaften in Bezug auf Haftung und Beständigkeit auf dem Empfängerträgerkörper besitzt, auf einen Heizzylinder (1), der in Drehung versetzt werden kann,
b) Einbringung des Trägerbandes (4) aus Textil, Kunststoff, Papier oder ähnlichem Material und Transport hin zu dem Zylinder (1) hinter dem Auftragspunkt des Materials (3),
c) Positionierung des Trägerbandes (4) auf dem Material (3) rund um den Zylinder (1) bei gleichzeitiger Verpressung des Trägerbandes auf dem Heizzylinder zur Herstellung einer Verbindung mit dem Material (3),
d) Drehung des Zylinders (1) nach einer vorgegebenen, anwendungsspezifischen Drehamplitude ausgehend vom Aufbringungsbereich des Materials (3) auf dem Zylinder (1),
e) Abtransport des Trägerbandes (4) mit dem eingearbeiteten Material (3) für eine weitere Bearbeitung des erhaltenen Ganzen.

2. Verfahren nach Anspruch 1, **dadurch gekennzeichnet, dass** der Auftrag des Materials (3), das gute Eigenschaften in Bezug auf Haftung und Beständigkeit auf dem Empfängerträger besitzt, gemäß der Aufbringung einer durchgehenden, durchlässigen oder nicht durchlässigen Folie erfolgt.

3. Verfahren nach Anspruch 1, **dadurch gekennzeichnet, dass** das Material, das gute Eigenschaften in Bezug auf Haftung und Beständigkeit besitzt, aus einem Werkstoff besteht, der in der Lage ist, mit dem Trägerband in weniger als einer Zylinderumdrehung eine Polymerisationsreaktion einzugehen.

4. Verfahren nach Anspruch 3, **dadurch gekennzeichnet, dass** das Material (3) aus Silikonmaterial besteht.

5. Verfahren nach Anspruch 4, **dadurch gekennzeichnet, dass** das Silikonmaterial zweikomponentig ist.

6. Verfahren nach Anspruch 3, **dadurch gekennzeichnet, dass** das Material (3) aus einem Polyurethan-Werkstoff besteht.

7. Verfahren nach Anspruch 3, **dadurch gekennzeichnet, dass** das Material (3) aus einem Latex-Werkstoff besteht.

8. Verfahren nach Anspruch 1, **dadurch gekennzeichnet, dass** der Drehzylinder (1) einen Außenumfang mit einem glatten Oberflächenzustand aufweist, um ein optisch glattes Material zu erhalten.

9. Verfahren nach Anspruch 1, **dadurch gekennzeichnet, dass** der Drehzylinder (1) einen Außenumfang mit einer rauer Oberfläche aufweist, um die Oberfläche soweit zu mattieren, bis sie zur Erzielung eines Markierungseffektes graviert ist.

## Claims

1. Method for assembling a carrier strip (4) made of textile, plastic, paper material or the like, to a receiving carrier with a material (3) having adhesion and resistance properties, said method implementing the following steps :
a) preliminarily depositing the material (3), having adhesion and resistance properties to the receiving carrier , on a rotatable heating cylinder (1),
b) providing a carrier strip (4) made of a textile, plastic, or paper material or the like, and conveying the same towards said cylinder (1) downstream from the deposition point of said material (3),
c) positioning said carrier strip (4) on said material (3) around the cylinder (1) and simultaneously pressing said carrier strip onto said heating cylinder so as to generate a bond with said material (3),
d) rotating the cylinder (1) at a rotation amplitude determined on the basis of the application from the application area of said material onto the cylinder (1),
e) removing said carrier strip (4) with said integrated material (3) for a subsequent processing of the assembly thus obtained.

2. Method according to claim 1, **characterized in that** steps of depositing said material (3) having adhesion and resistance properties on the receiving carrier are performed depending on the applications of a solid or aerated continuous film.

3. Method according to claim 1, **characterized in that** said material (3) having adhesion and resistance properties is made of a material capable of having a polymerization reactivity with the carrier strip on less than one revolution of the cylinder.

4. Method according to claim 3, **characterized in that** said material (3) is made of a silicone material.

5. Method according to claim 4, **characterized in that** the silicone material is bi-component.

6. Method according to claim 3, **characterized in that** said material (3) is made of a polyurethane material.

7. Method according to claim 3, **characterized in that** said material is made of a latex material.

8. Method according to claim 1, **characterized in that** the rotary cylinder (1) has a peripheral edge with a smooth surface finish to obtain a smooth appearance of the material.

9. Method according to claim 1, **characterized in that** the rotary cylinder has a peripheral edge with a rough surface finish to mattify the surface until etching in order to obtain a marking effect.
